# EUROPEAN PATENT APPLICATION

(11) **EP 0 525 783 A2**
(43) Date of publication of application: **03.02.1993**
(21) Application number: 92113042.3
(22) Date of filing: 30.07.1992
(51) Int. Cl.: G06F 9/46

(54) **Image processing modular system and method of allocating jobs to modules**

(30) Priority: 31.07.1991 JP 216080/91
(71) Applicant: Dainippon Screen Mfg. Co., Ltd., Kamikyo-ku Kyoto 602 (JP)
(72) Inventor: Usumoto, Hiroaki, Dainippon Screen Mfg. Co., Ltd., Horikawa-dori, Kamikyo-ku, Kyoto (JP)
(74) Representative: WILHELMS, KILIAN & PARTNER Patentanwälte

(57) **Abstract**

The invention provides an improved system for efficiently controlling plural image processing apparatus to enhance the operation rate of each apparatus. The system includes: plural image processing modules (11 through 15) identically constructed to execute some predetermined image processing programs; a communication control unit (31); and a module management unit (41). The module management unit registers contents of plural sets of task to be executed, and allocates a job of each task to one of the plural image processing modules according to predetermined priority of the jobs. The communication control unit transmits data or information between each module and the module management unit.

## Description

### BACKGROUND OF THE INVENTION

### Field of the Invention

The present invention relates to a modular system for image processing and a method of allocating jobs to the modules, and more particularly to an image processing system comprising a management unit for managing plural modules.

### Description of the Prior Art

A conventional image processing system comprises several dedicated units or machines such as a drafting machine, a page-make-up apparatus, and a magnification measurement device; and it also comprises a control station monitoring the progress of operation in each unit. It is not so rare in the system that plural images are waiting in line to be processed with some processing unit while other units are not working. This makes the operation rate of some units considerably low.

Although additional processing units which are most demanded may be installed in the system to obviate the above drawback, this often causes another problem of installation space and cost.

### SUMMARY OF THE INVENTION

An object of the present invention is thus to improve the rate of operation of each unit included in an image processing system.

The present invention is directed to an image processing system comprising: a plurality of image processing modules, each having means for executing at least one identical image processing; management means having a memory for registering plural jobs to be executed in a management table and determining to allocate the plural jobs to the plurality of image processing modules according to predetermined priorities of the respective plural jobs, the management table and the priorities being stored in the memory; and communication means for transferring information required in executing jobs between the management means and each of the plurality of image processing modules according to the determining of the management means.

The present invention is also directed to a job management apparatus for managing jobs to be executed in an image processing system, comprising: means for registering plural jobs to be executed in a management table; means for determining to allocate the plural jobs to the plurality of image processing modules according to predetermined priorities of the respective plural jobs; and a memory for storing the management table and the priorities.

Preferably, the management means comprises means for storing a plurality of processing programs used for executing different kinds of jobs; and means for selectively supplying the plurality of processing programs to the plurality of image processing modules in response to the kinds of jobs allocated to the plurality of image processing modules.

In the preferred embodiment, the priorities of the plural jobs include preceding-job data indicating whether a preceding job which is to be executed before each of the plural jobs exist or not such that the management means suspend allocation of those jobs which have a preceding job until the preceding job is completed.

The management means further comprises means for revising the management table in response to an output supplied from one of the plurality of image processing modules indicating completion of one of the plural jobs.

The management table includes progress data indicating progress status of jobs being executed in the plurality of image processing modules, respectively; and the management means further comprises input means for inputting new-job data indicating a new job to be executed in the highest priority; and means for interrupting a job in progress in one of the plurality of image processing modules according to the progress data such that the new job is executed in the one of the plurality of image processing modules.

The management means further comprises means for storing data representing the interrupted job interrupted to execute the new job; and means for restoring the interrupted job in completion of the new job.

The management table includes progress data indicating progress status of the jobs being executed in the plurality of image processing modules; and the management means further comprises input means for inputting new-job data indicating a new job to be executed in the highest priority; and means for allocating the new job at the head of a queue of waiting jobs to one of the plurality of image processing modules according to the progress data such that the new job is executed in the least waiting time.

The present invention is further directed to a method of managing jobs to be executed in an image processing system with the aid of a computer, the system comprising a plurality of image processing modules each having means for executing at least one identical image processing, a job management apparatus having a memory, and communication means for transferring information required in executing jobs between the job management apparatus and each of the plurality of image processing modules, the method comprising the steps of: (a) registering plural jobs to be executed in a management table and in the memory; (b) determining priorities of the respective plural jobs and memorizing the priorities in the memory; and (c) allocating the plural jobs to the plurality of image processing modules according to the priorities of the respective plural jobs.

The above and further objects and features of the invention will more fully be apparent from the following detailed description with accompanying drawings.

### BRIEF DESCRIPTION OF THE DRAWINGS

Fig. 1 is a block diagram illustrating an image processing modular system embodying the present invention;
Fig. 2 is a block diagram illustrating a structure of an image processing module in the system;
Fig. 3 is a block diagram showing a structure of a module management unit 41;
Fig. 4 is an explanatory view showing the contents of a table memory;
Fig. 5 is an explanatory view showing a module management table;
Fig. 6 is an explanatory view showing a task management table;
Fig. 7 is an explanatory view showing a job management table;
Fig. 8 is a view illustrating a one-page image to be processed;
Fig. 9 is an explanatory view showing a priority table;
Fig. 10 is a flowchart showing control steps of the system; and
Fig. 11 is a flowchart showing control steps on interruption by a task with a higher priority.

### DESCRIPTION OF THE PREFERRED EMBODIMENT

### A. Structure of System

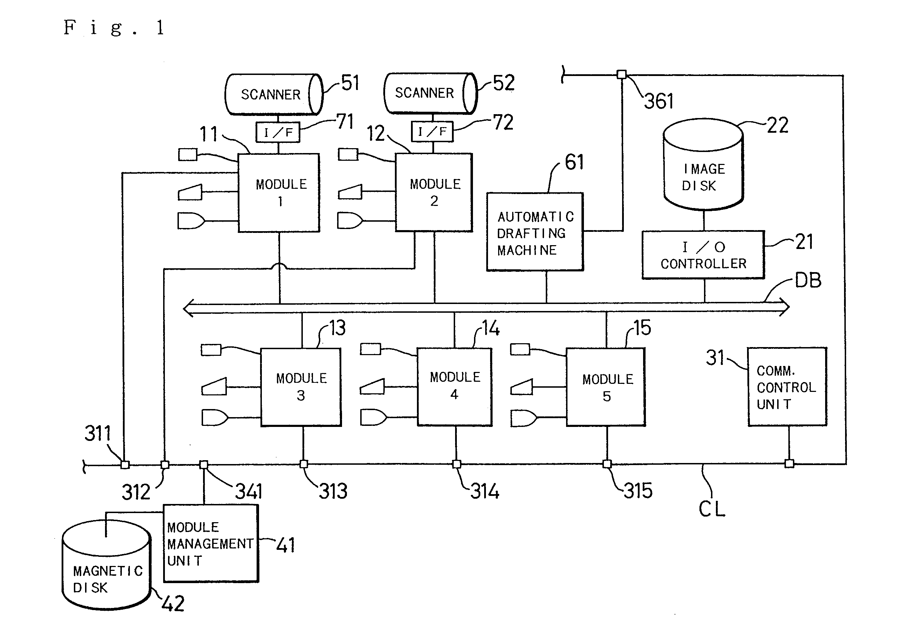

Fig. 1 is a block diagram illustrating an image processing modular system embodying the present invention.

The system includes five image processing modules 11 through 15 connected to one another through an image data bus DB. The Image data bus DB is also connected to an image disk 22 via an I/O controller 21. The image disk 22 stores color separation data of picture images, and line-work image data representing characters and line-work images. Image data stored in the image disk 22 is transmitted on demand to the modules through the image data bus DB.

The image processing modules 11 through 15 are further connected to a communication line CL with connectors 311 through 315, respectively. A communication control unit 31 connected with the communication line CL controls communication between the modules and units in the system. A module management unit 41, which is also connected to the communication line CL with a connector 341, directs the management of jobs and instructs the five modules 11 through 15 what job to do.

The module management unit 41 is provided with a magnetic disk 42 for storing various processing programs. When a certain image processing is to be executed at a certain module, a program for executing the image processing is read out from the magnetic disk 42 and transmitted to the module.

The first and second modules 11 and 12 are connected to scanners 51 and 52 for scanning and recording images via scanner interfaces 71 and 72, respectively.

An automatic drafting machine 61 for producing a lay-out sheet is connected to the data bus DB as well as to the communication line CL with a connector 361.

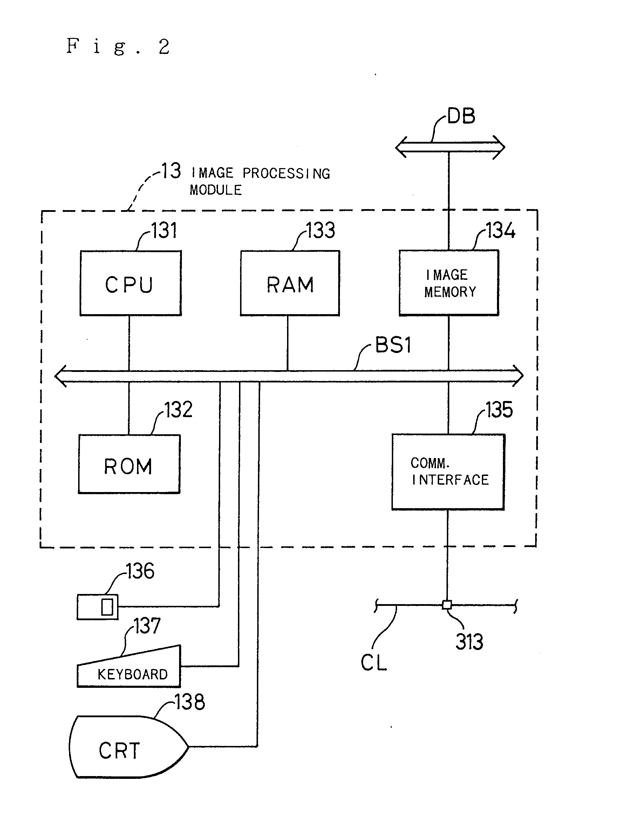

Fig. 2 is a block diagram illustrating construction of an image processing module. Although it shows the structure of the third image processing module 13, other modules have the same structure.

The module 13 includes: a CPU (central processing unit) 131; a ROM (read only memory) 132 for storing certain control programs; a RAM (random access memory) 133; an image memory 134; and a communication interface 135. The elements 131 through 135 are interconnected with one another via a bus BS1. The communication interface 135 is further connected to the communication line CL with a connector 313. A mouse 136, a keyboard 137, and a CRT (cathode ray tube) 138 are also connected to the bus BS1.

The RAM 133 memorizes a processing program for executing image processing which is supplied by the module management unit 41. The module management unit 41, as will be described later in detail, reads out processing programs from the magnetic disk 42, and transmits them to the modules via the communication line CL according to the jobs assigned to respective modules.

The image memory 134 may be implemented by any suitable element such as a dynamic RAM or a magnetic disk as long as it can store various image data. The image memory 134 stores, for example, four color separation image data representing respective color image components of Y (yellow), M (magenta), C (cyan), and K (black) with eight bits for each pixel. For a line-work image or a character, the image memory 134 stores bit map data showing the image with one bit (complex bits in some cases) for each pixel or vector data representing the outline of the character or the line-work image.

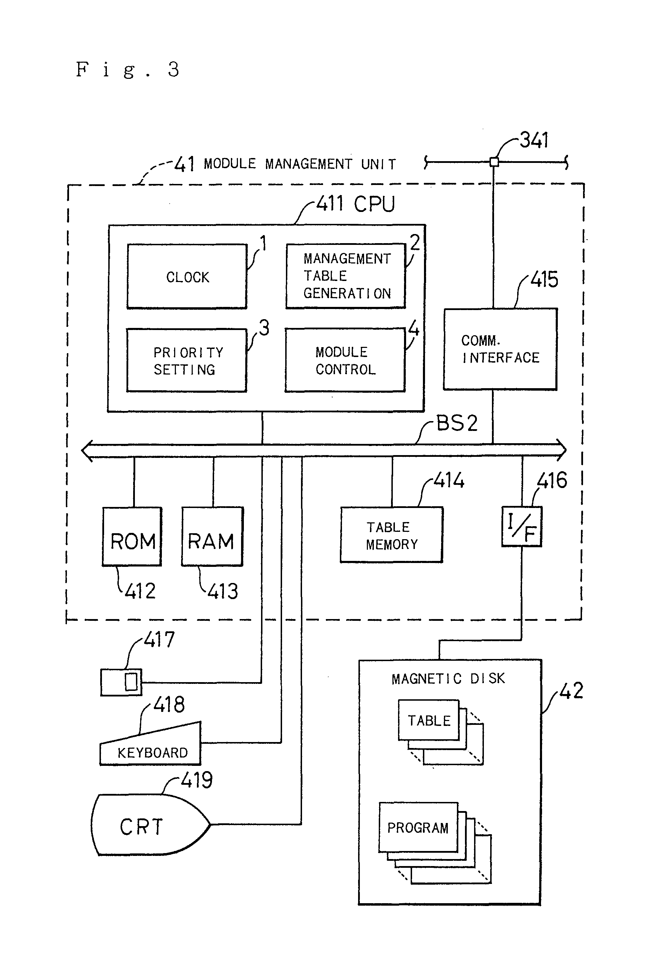

Fig. 3 is a block diagram showing the structure of the module management unit 41, including a CPU 411, a ROM 412 for storing predetermined control programs, a RAM 413, a table memory 414, a communication interface 415, and another interface 416. The elements 411 through 415 are interconnected through a bus BS2, and the interface 416 links the bus BS2 with the magnetic disk 42. The communication interface 415 is connected to the communication line CL with a connector 341. A mouse 417, a keyboard 418, and a CRT 419 are also connected to the bus BS2.

The CPU 411 includes a clock part 1, a management table generation part 2, a priority setting part 3, and a module control part 4. The parts 1 through 4 execute respective processes according to the control programs stored in the ROM 412. The parts 1 through 4 are implemented by the programs executed by the CPU 411.

The clock part 1 counts the time used for controlling the modules, and the management table generation part 2 creates three types of management tables explained later. The priority setting part 3 sets the priority of each job executed by the system according to a predetermined rule as described later. The module control part 4 transfers a certain processing program to a certain module according to the module management table created by the management table generation part 2, and supplies data required for executing the processing program to the module.

The table memory 414 of a dynamic RAM stores three types of management tables created by the management table generation part 2.

The magnetic disk 42 stores plural processing programs for executing image processing as well as temporarily stores the contents of the table memory 414 before the image processing system is switched off. By displaying the contents of the table memory 414 stored in the magnetic disk 42, an operator is able to see the conditions and circumstances before power-off.

### B. Contents of Table Memory

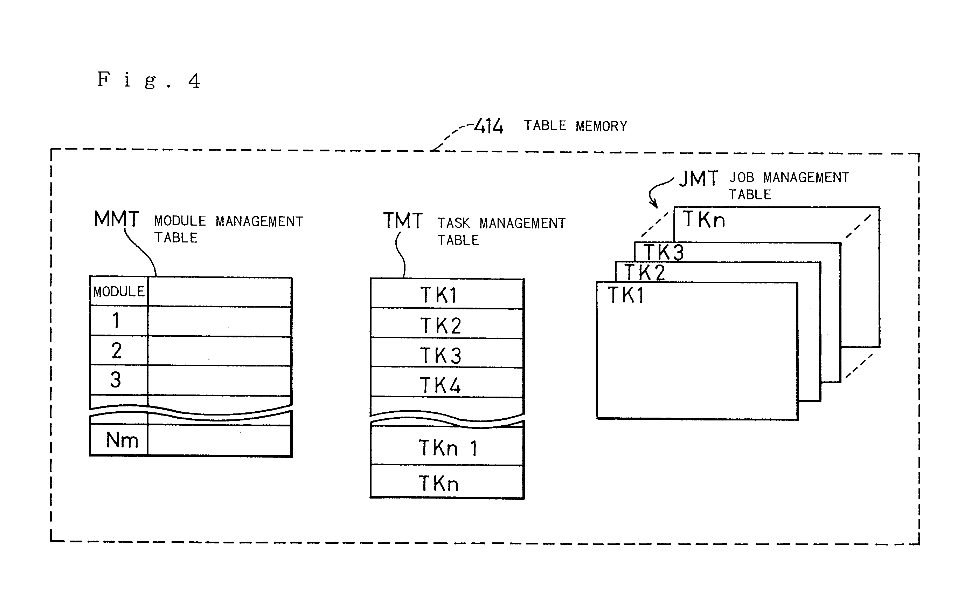

Fig. 4 is an explanatory view showing the contents of the table memory 414, which stores a module management table MMT, a task management table TMT, and a job management table JMT.

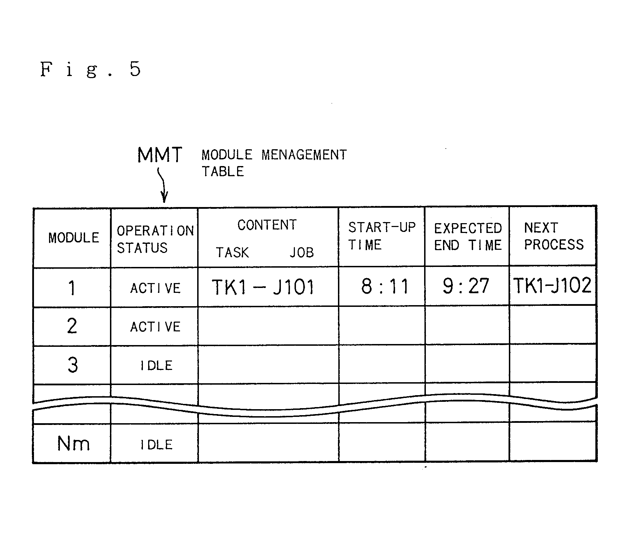

The module management table MMT shows the following data including operation status of each module as shown in Fig. 5.
a1) Operation status of Module: showing whether each module is in operation ('active' in the table) or not ('idle' in the table). In this embodiment, the image processing system includes modules 1 through Nm.
a2) Content of Process: showing the task number and the job number under way in each module. The 'task' denotes a set of jobs required for preparing a set of printed matter (for example, a leaflet or a brochure of five pages). The 'job' denotes one process like retouching or page make-up executed by one processing program. In other words, one task consists of plural jobs. Each task is given a task number when each task is registered in the module management unit 41, and each jobs is given a job number predetermined according to the content of the job.
a3) Start-up Time: showing the time when each module started the current job.
a4) Expected End Time: showing the expected time when each module will complete the current job.
a5) Next Process: showing the next job to be executed by the module after completion of the current job.

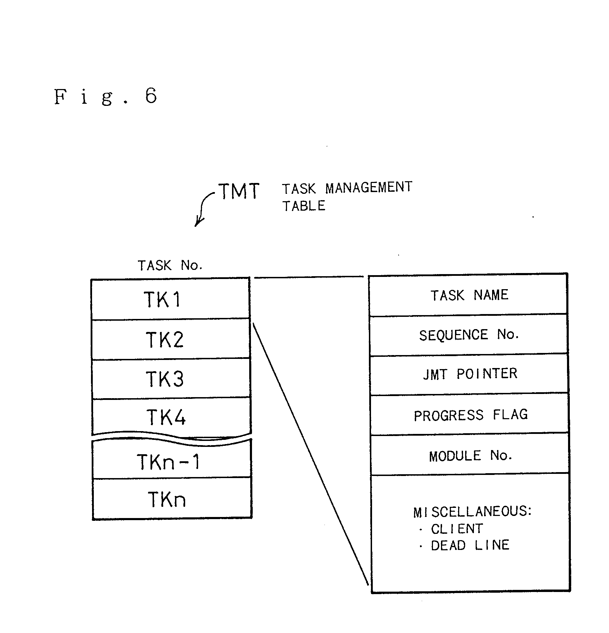

The task management table TMT registers the following data including task management data and job progress data for each task as shown in Fig. 6.
b1) Name of Task: showing the name of the task, for example, 'AB Corporation Brochure'. b2) Sequence Number: showing a reference number of the task.
b3) Job Management Table Pointer: showing where in the job management table JMT is registered each job related to the task.
b4) Progress Flag: showing progress of each task as 'completed', 'not started', 'suspended', and 'in operation'. Here 'suspended' denotes the condition that some jobs of the task have been done, but the residual jobs are suspended since other task has interrupted.
b5) Module Number: showing which modules are executing the task. When plural jobs related to the task are simultaneously executed by plural modules, the numbers of the plural modules are registered.
b6) Miscellaneous: miscellaneous data such as the name of the client and the dead line.

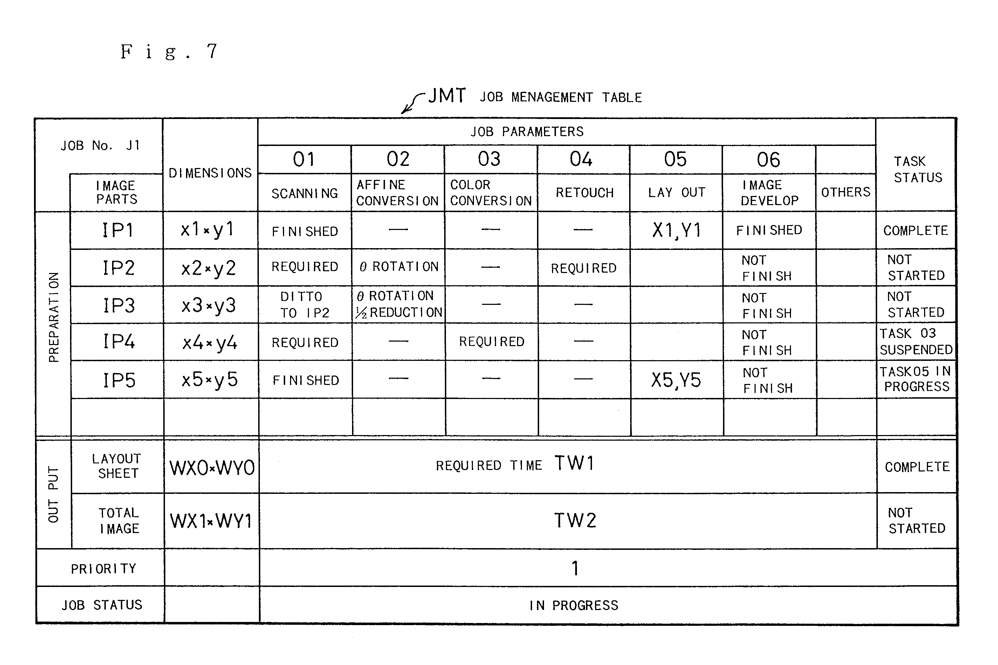

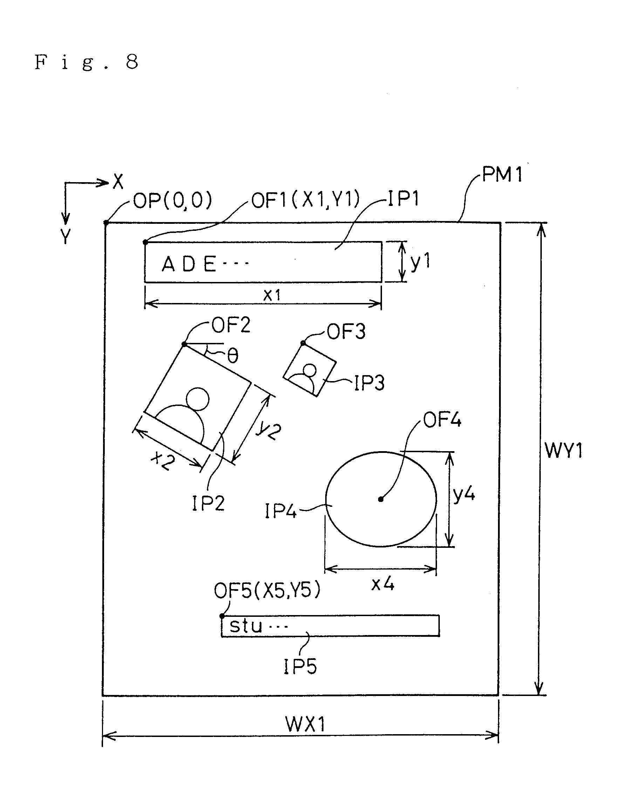

The job management table JMT shows the content of jobs related to each task. A sheet of the job management table JMT is produced for each task as shown in Fig. 7, which stores the following data.
c1) Image Part: showing symbols indicating image parts to be processed in the task. In the embodiment, task TX1 is to create a one-page image PM1, shown in Fig. 8, including five image parts IP1 through IP5. The first and fifth image parts IP1 and IP5 are character images while the second, third, and fourth image parts IP2 through IF4 are picture images.
c2) Dimensions of Image Part: showing the dimensions of each image part. As to the second image part IP2 (Fig. 8), which is inclined at an angle 0, the registered dimensions are the widths x2 and y2 which are measured in the subscanning and main scanning directions both defined at the time of reading the image part IP2. As to the fourth image part IP4, whose outer shape is not a rectangle, the registered dimensions are the maximum widths x4 and y4 in the subscanning and main scanning directions, respectively, both defined at the time of reading the image.
c3) Job Parameters: data related to each job of each image part, including (1) process parameters used in executing image processing, (2) priority of the job, (3) a time period required for completing the job, and (4) 'complete' or 'non- complete' of the job. The "jobs" here includes image scanning, affine conversion, color conversion, retouching, laying-out (page make-up), and image data development. Part of the data is omitted in Fig. 7 for convenience of illustration.

In the image scanning column of Fig. 7, 'finished' means that image data of the image part has already been acquired, and 'required' means that image scanning or color separation is required for the image part.

In the affine conversion column, the rotation angle 0 is registered for the second image part IP2, and the rotation angle 0 and reduction rate of 1/2 are registered for the third image part IP3.

In lay-out operation, an operator locates the image parts on a lay-out sheet image while observing the layed-out image displayed on the CRT of the module. As a result, such data are registered in the job management table JMT as vector data indicating a clipping area of each image part, and positional data indicating positions of origins OF1 through OF5, or lay-out off-set, of the image parts IP1 through IP5. The positional data is defined in the coordinates system whose origin is the origin OP of the total image PM1. For the reason of clarity, the lay-out column of the table of Fig. 7 only shows the coordinates of the lay-out off-sets OF1 (X1, Y1) and OF5(X5, Y5) for the first and fifth image parts IP1 and IP5.

In image data development operation, image data of the image parts which are through other processings such as affine conversion, retouching, and laying-out are developed to be raster image data representing the layed-out total image, and the raster image data is stored in the image memory 134 (Fig. 2). The image memory 134 can be used as a multi-digit flame memory for memorizing multi-color image data, and it can be used as a binary flame memory for memorizing binary image data.

Color conversion operation, which is directed for the fourth image part IP4, converts the color of the image according to a predetermined color conversion table.

c4) Job status: showing whether all the jobs are completed for each image part.

The above data c1 through c4 are all related to the operations before outputting the total image.
c5) Output operation information: The output process includes drafting on a lay-out sheet with the automatic drafting machine 61, and recording the total image PM1 (Fig. 8) on a photosensitive film with a scanner. The dimensions of the lay-out sheet and the total image, and the time period required for the output process are registered in the job management table JMT as shown in Fig. 7.
c6) Priority: showing the priority of the task. The priority is determined according to the dead line of each task and is input into the module management unit 41 by an operator.
c7) Task status: showing whether the task is not started, in progress, or completed.

Among all the data registered in the job management table JMT, data other than the job status c4, the task status c7, and the time period required for each job are input by an operator and registered in the job management table JMT with the management table generation part 2.

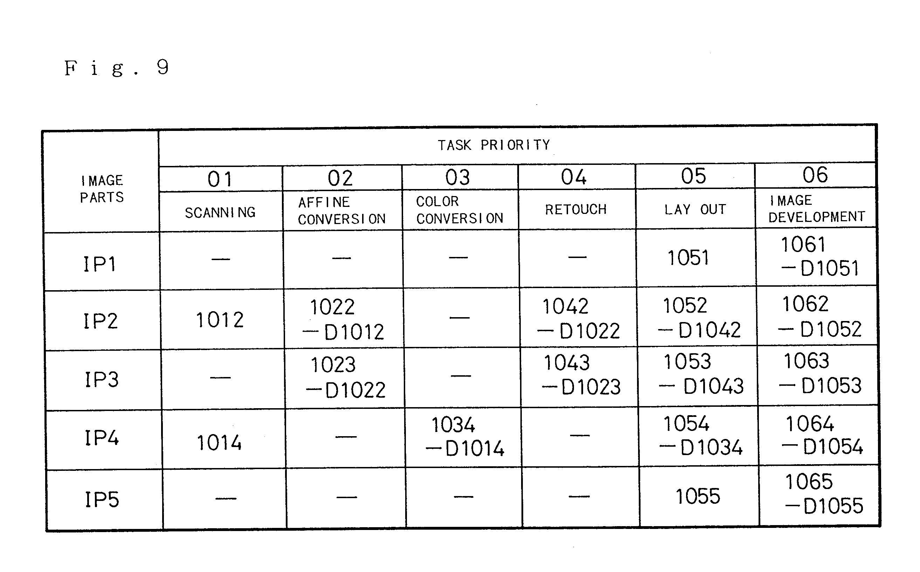

The priority setting part 3 determines the priority of each job of each task according to the priority of the task and the job parameters except the priority itself, and registers the job priority as one of the job parameters in the job management table JMT. Fig. 9 shows an example of job priorities allotted to the jobs of the task TK1 of Fig. 7.

Each job of each image part is given one job priority data. As shown in Fig. 9, each job priority data includes four decimal digits in the first half and another four decimal digits preceded by the letter "D" in the latter half. In some cases such as the scanning operation for the image part IP2, the job priority data has only the first four digits. The symbol '-' in each block means that the job is not executed for the image part.

The job priority data is determined in the following manner. The first digit in the first half of the job priority data is the same as the priority of the task ('1' for the task TK1). The second and third digits indicate the number allocated to each job, that is, the number written on the top of the column of each job in Fig. 9 ('01' for scanning). The last digit in the first half is equal to the ID number of each image part ('2' for the image part IP2). Namely, the job priority data is determined according to (1) the priority of the task, (2) the priority previously allocated to each job, and (3) the priority of the image part. When an operator specifies the priority of the task and that of the image part, the job priority data is automatically determined by the priority setting part 3.

The four digits in the second half of the priority data means the priority of the previous job which is to be executed before the specific job. In other words, if the job priority data includes the second half, the specific job expressed by the first four digits is executed after completion of the previous job expressed by the latter four digits. For example, affine conversion of the image part IP2 is executed after completion of the image scanning of the image part IP2 whose priority data is "1012".

The decimal number expressed by the first half of the priority data shows the order of priority. Namely, the job having a smaller decimal number generally has a higher priority. However, if the job priority data includes the latter part, the job is suspended until the previous job indicated with the latter half is completed, and the priority expressed by the first four digits is compared with those of other jobs only after the previous job is completed.

Since the job priority data for each job of each task has the first half indicating the priority of the job itself, and the second half indicating the priority of the previous job which should be executed before the job, the image processing modular system can efficiently execute the jobs in order of priority with reference to the job priority data.

### C. System management procedure

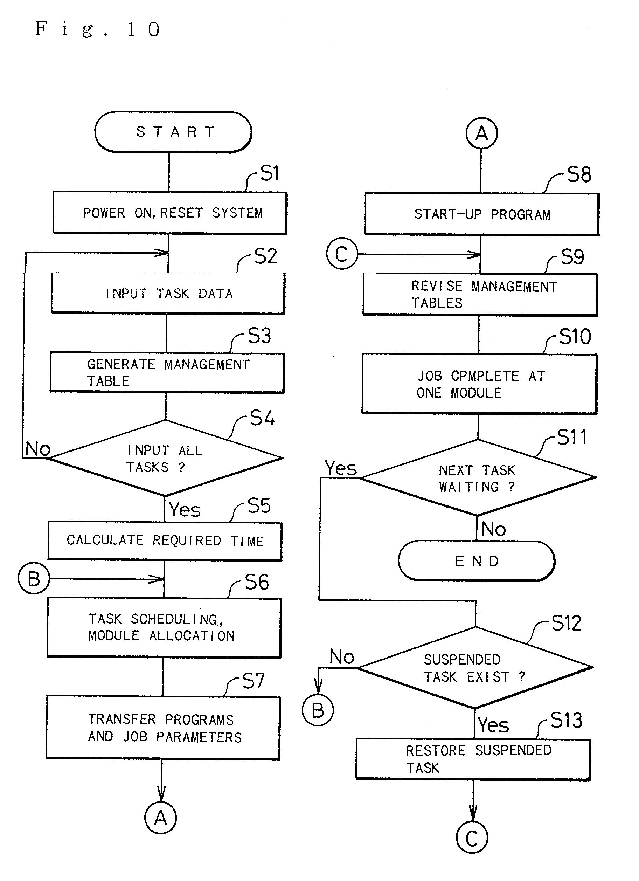

Fig. 10 is a flowchart showing the procedure of managing the image processing modular system.

At step S1, the whole system is powered on and reset to predetermined initial conditions. Here the module management unit 41 reads the module management table MMT, the task management table TMT, and the job management table JMT stored in an external memory unit (in the embodiment, from the magnetic disk 42) and stores the tables in the table memory 414.

At step S2, an operator inputs data related with a task to be executed by the image processing system through the keyboard 418 or the mouse 417 of the module management unit 41. The input data is registered in the job management table JMT. Only new tasks are required to be registered manually at step S2 because information about the tasks previously registered in the tables is automatically input into the table memory 414 at step S1.

At step S3, the management table generation part 2 creates the management tables on the new task according to the data input at step S2. The program then proceeds to step S4 at which it is judged whether all tasks to be registered have been input. When there exists a task to be registered, the program returns to step S2, and steps S2 and S3 are repeated.

Input process of steps S2 through S4 can be executed at any time during operation of the system.

At step S5, the management table generation part 2 calculates the time period required for each job of the newly registered tasks. For example, the time period required for scanning a picture image with the scanner 51 is determined according to data including the dimensions of the image part, the revolving speed of the scanner drum, and the number of scanning lines. The time period determined by the part 2 is registered as a job parameter of each job for each image part in the job management table JMT (Fig. 7).

At step S6, the module control part 4 schedules processing of the tasks TK1 through TKn registered in the table memory 414 (Fig. 4) according to the order of priority. The priority of each task is registered in the job management table JMT (Fig. 7). Jobs of the task with the highest priority or the smallest priority number are allocated to the modules in order of priority.

The highest priority is given to the task TK1 shown in Fig. 7. In this case, jobs for scanning the second and fourth image parts IP2 and IP4 are respectively allocated to the modules 11 and 12 connected to the scanners 51 and 52 according to the job priority data of Fig. 9. Lay-out process for the first image part IP1 is allotted to the third module 13 while the lay-out process for the fifth image part IP5 is allotted to the fourth module 14. The first job for the third image part IP3, that is, affine conversion, will be executed after completion of affine conversion for the second image part IP2 according to the job priority data. Since there are no more jobs for the task TK1 which can be executed at this time, the free fifth module 15 is assigned to a job of another task with the second highest priority. In short, when there is a free module to which no job of a task with higher priority is allocated, a job of another task with the next priority is allotted to the free module.

Since the modules in this image processing system are identically constructed, the modules can efficiently execute any job allocated thereto. Accordingly, this system enhances the operation rate of each module and shortens the time required for completion of each task.

At the next step S7, the module control part 4 reads out processing programs from the magnetic disk 42 for executing the jobs allocated to the modules at step S6, and transmits the programs to the respective modules. Job parameters of the job to be executed by each module is also transferred from the job management table JMT to each module.

The program then proceeds to step S8 at which the module control part 4 commands start-up of the processing program to each module via the communication line CL. In response to the commands, the modules automatically executes those jobs which does not require manual operation such as affine conversion or image development. On the contrary, an operator operates an assigned module for the jobs which require manual operation such as image scanning, lay-out, and retouching.

At step S9, the management table generation part 2 revises the three management tables MMT, TMT, and JMT. All data on the operation status of each module, the content of the job in progress, the start-up time, the expected end time, and the next processing is renewed in the module management table MMT (Fig. 5). The module management table MMT is always displayed on the CRT 419 of the module management unit 41 unless otherwise instructed.

In the task management table TMT (Fig. 6), renewed is data on the progress flag (denoting 'in operation', 'not started', or the like) and the module number of the working modules (the four module numbers 11 through 14 in the case of the task TK1).

In the job management table JMT (Fig. 7), data on progress of each job for each image part and progress of the whole task (completed, in progress, or not started) is renewed

All the modules continue operation until a job is completed in one of the modules at step S10.

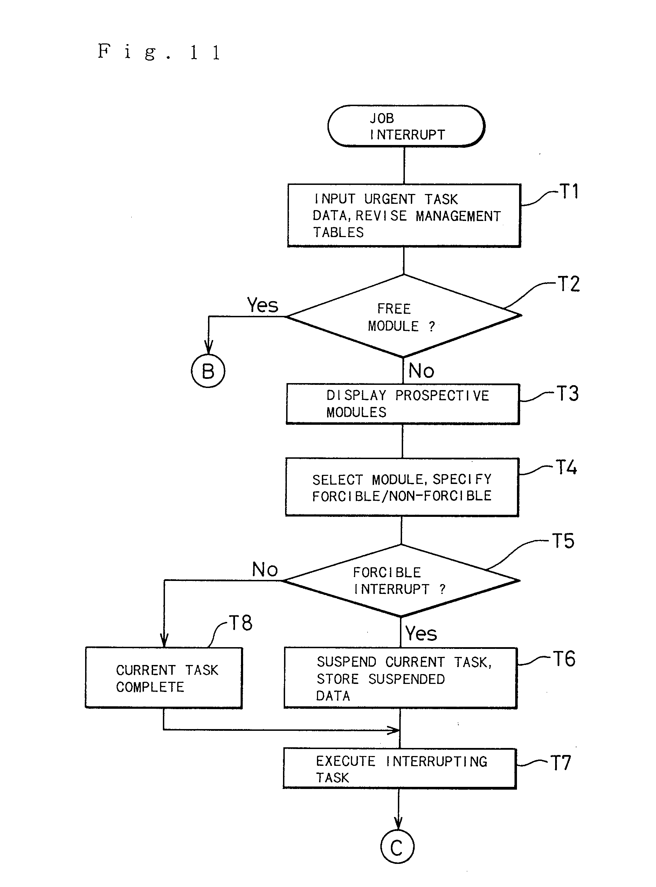

In some cases, urgent task interrupts the operation: for example, correction of a once-completed total image. Fig. 11 is a flowchart showing control steps on interruption of operation by such task.

When urgent task interrupts the operation, a system operator inputs data of the urgent task into the module management unit 41 at step T1. The operator allocates the highest priority, for example, the priority '0' to the urgent task amongst all the tasks registered in the table memory 414, and specifies the task as interrupting task.

At step T2, the module management unit 41 checks for a free module which is not executing any job at the moment. When there is a free module, the interrupting task is allocated to and executed by the free module according to steps S6 through S9 of Fig. 10.

When there is no free module, on the other hand, the program proceeds to step T3 at which the module management unit 41 displays one or plural prospective modules for the interrupting task on the CRT 419. Here, the proposed modules are either those which have been executing the current job for no more than a predetermined period (for example, ten minutes) or those which will complete the current job in no more then a predetermined period (for example, ten minutes). The module management unit 41, for example, shows the module numbers of the proposed modules with a different color from those of the other modules in the module management table MMT displayed on the CRT 419. The operator selects one out of the proposed modules and specifies whether the job currently executed by the selected module is to be forcibly interrupted at step T4.

When forcible interruption of the current job is determined at step T5, the program proceeds to step T6, at which the module management unit 41 transmits a command of forcible interruption to the selected module. The module interrupts operation of the current job in response to the command and transfers the image data in the suspended conditions and data representing the progress of the job to the module management unit 41. The module management unit 41 then stores the data supplied from the module into the magnetic disk 42.

At step T7, the module control part 4 instructs the selected module to execute a job of the interrupting task. The program then returns to step S9 of Fig. 10 to revise the management tables.

When the operator instructs non-forcible interruption at step T4, the program proceeds from step S5 to step T8 at which the module control part 4 waits until the selected module completes the current job, and then goes to step T7 for execution of the interrupting task.

When one of the modules completes its job at step S10 of Fig. 10, the program proceeds to step S11 at which the module control part 4 determines whether another job waiting for the module is registered in the module management table MMT.

When no jobs are waiting for the module, the module stops operation. On the contrary, when a waiting job exists, the program proceeds to step S12 at which the module control part 4 checks for interrupted jobs. Interrupted jobs are registered in the job progress data of the job management table JMT (Fig. 7).

When an interrupted job exists in the job management table JMT, the module control part 4 determines restoration of the interrupted job with the top priority at step S13. The program then returns to step S9 to renew the management tables. Here, the image data in the suspended conditions and the data indicating the progress of the interrupted job are transferred from the magnetic disk 42 to the module. When interrupted jobs are not found at step S12, the program returns to step S6 at which scheduling of jobs and allocation to the modules are performed again, and repeats the processing of steps S7 and S8.

As described above, the image processing modular system of the above embodiment includes plural image processing modules identically constructed to execute various image processing programs. Each of the image processing modules is assigned with a job according to the priority of jobs, and all the modules are thus operated efficiently. Accordingly, this system improves the operation rate of each module, and shortens the time required for completion of each task.

### D. Modification

(1) The processing programs can be stored in external memory units connected to the respective modules instead of being collectively stored in the single magnetic disk 42 connected to the module management unit 41. In the above embodiment, however, an external memory unit of a large capacity for storing all the processing programs is not required for each module because each module is supplied with a processing program to execute from the module management unit 41.
(2) Some of the image processing modules can be differently constructed in the above embodiment. The modules have at least an identically constructed part to execute a predetermined image processing program. For example, all the modules can execute affine conversion, color conversion, and retouching while only the specific modules can execute image scanning and image development.
(3) The communication control unit 31 controls communication of the whole system in the embodiment. Alternatively, a communication control circuit can be installed in each constituent of the system, such as the image processing module, the image disk, and the module management unit.
(4) In the above embodiment, each job is allocated to one of the image processing modules according to the job priority data (Fig. 9) determined by the priority setting part 3. The job allocation can be determined in other ways. For example, as many jobs as possible which can be simultaneously executed may be allocated to the modules for the task having the highest priority.

As described above, the image processing system according to the present invention includes plural image processing modules each having an identical part for executing at least one predetermined image processing program. The module control unit therefore allocates jobs to the plural modules in order of priority, and does not cause any free module. Accordingly, the operation rate of each module is highly improved.

Although the present invention has been described and illustrated in detail, it is clearly understood that the same is by way of illustration and example only and is not to be taken by way of limitation, the spirit and scope of the present invention being limited only by the terms of the appended claims.

## Claims

1. An image processing system comprising:
a plurality of image processing modules, each having means for executing at least one identical image processing;
management means having a memory for registering plural jobs to be executed in a management table and determining to allocate said plural jobs to said plurality of image processing modules according to predetermined priorities of said respective plural jobs, said management table and said priorities being stored in said memory; and
communication means for transferring information required in executing jobs between said management means and each of said plurality of image processing modules according to said determining of said management means.

2. An image processing system in accordance with claim 1, wherein:
said management means comprises means for storing a plurality of processing programs used for executing different kinds of jobs; and means for selectively supplying said plurality of processing programs to said plurality of image processing modules in response to the kinds of jobs allocated to said plurality of image processing modules.

3. An image processing system in accordance with claim 1, wherein:
said priorities of said plural jobs include preceding-job data indicating whether a preceding job which is to be executed before each of said plural jobs exist or not such that said management means suspend allocation of those jobs which have a preceding job until said preceding job is completed.

4. An image processing system in accordance with claim 1, wherein:
said management means further comprises means for revising said management table in response to an output supplied from one of said plurality of image processing modules indicating completion of one of said plural jobs.

5. An image processing system in accordance with claim 4, wherein:
said management table includes progress data indicating progress status of jobs being executed in said plurality of image processing modules, respectively; and
said management means further comprises input means for inputting new-job data indicating a new job to be executed in the highest priority; and means for interrupting a job in progress in one of said plurality of image processing modules according to said progress data such that said new job is executed in said one of said plurality of image processing modules.

6. An image processing system in accordance with claim 5, wherein:
said management means further comprises means for storing data representing the interrupted job interrupted to execute said new job; and means for restoring said interrupted job in completion of said new job.

7. An image processing system in accordance with claim 4, wherein:
said management table includes progress data indicating progress status of the jobs being executed in said plurality of image processing modules; and
said management means further comprises input means for inputting new-job data indicating a new job to be executed in the highest priority; and means for allocating said new job at the head of a queue of waiting jobs to one of said plurality of image processing modules according to said progress data such that said new job is executed in the least waiting time.

8. A job management apparatus for managing jobs to be executed in an image processing system, said system comprising a plurality of image processing modules each having means for executing at least one identical image processing, and communication means for transferring information required in executing jobs between said job management apparatus and each of said plurality of image processing modules, said job management apparatus comprising:
means for registering plural jobs to be executed in a management table;
means for determining to allocate said plural jobs to said plurality of image processing modules according to predetermined priorities of said respective plural jobs; and
a memory for storing said management table and said priorities.

9. A job management apparatus in accordance with claim 8, further comprising:
means for storing a plurality of processing programs used for executing different kinds of jobs; and
means for selectively supplying said plurality of processing programs to said plurality of image processing modules in response to the kinds of jobs allocated to said plurality of image processing modules.

10. A job management apparatus in accordance with claim 8, wherein:
said priorities of said plural jobs include preceding-job data indicating whether a preceding job which is to be executed before each of said plural jobs exist or not; and
said management apparatus further comprises means for suspending allocation of those jobs which have a preceding job until said preceding job is completed.

11. A job management apparatus in accordance with claim 8, further comprising:
means for revising said management table in response to an output supplied from one of said plurality of image processing modules indicating completion of one of said plural jobs.

12. A job management apparatus in accordance with claim 11, wherein:
said management table includes progress data indicating progress status of jobs being executed in said plurality of image processing modules, respectively; and
said job management apparatus further comprises input means for inputting new-job data indicating a new job to be executed in the highest priority; and means for interrupting a job in progress in one of said plurality of image processing modules according to said progress data such that said new job is executed in said one of said plurality of image processing modules.

13. A job management apparatus in accordance with claim 12, further comprising:
means for storing data representing the interrupted job interrupted to execute said new job; and
means for restoring said interrupted job in completion of said new job.

14. A job management apparatus in accordance with claim 11, wherein:
said management table includes progress data indicating progress status of the jobs being executed in said plurality of image processing modules; and
said job management apparatus further comprises input means for inputting new-job data indicating a new job to be executed in the highest priority; and means for allocating said new job at the head of a queue of waiting jobs to one of said plurality of image processing modules according to said progress data such that said new job is executed in the least waiting time.

15. A method of managing jobs to be executed in an image processing system with the aid of a computer, said system comprising a plurality of image processing modules each having means for executing at least one identical image processing, a job management apparatus having a memory, and communication means for transferring information required in executing jobs between said job management apparatus and each of said plurality of image processing modules, said method comprising the steps of:
(a) registering plural jobs to be executed in a management table and in said memory;
(b) determining priorities of said respective plural jobs and memorizing said priorities in said memory; and
(c) allocating said plural jobs to said plurality of image processing modules according to said priorities of said respective plural jobs.

16. A method in accordance with claim 15, further comprising the steps of:
(e) storing a plurality of processing programs used for executing different kinds of jobs in said job management apparatus; and
(f) selectively supplying said plurality of processing programs to said plurality of image processing modules in response to the kinds of jobs allocated to said plurality of image processing modules.

17. A method in accordance with claim 15, wherein:
said priorities of said plural jobs include preceding-job data indicating whether a preceding job which is to be executed before each of said plural jobs exist or not; and
said method comprises the step of: (g) suspending allocation of those jobs which have a preceding job until said preceding job is completed.

18. A method in accordance with claim 15, further comprising the steps of:
(h) revising said management table in response to an output supplied from one of said plurality of image processing modules indicating completion of one of said plural jobs.

19. A method in accordance with claim 18, wherein:
said management table includes progress data indicating progress status of jobs being executed in said plurality of image processing modules, respectively; and
said method further comprises the steps of:
(i) inputting new-job data indicating a new job to be executed in the highest priority; and
(j) interrupting a job in progress in one of said plurality of image processing modules according to said progress data to thereby execute said new job in said one of said plurality of image processing modules.

20. A method in accordance with claim 19, further comprising the steps of:
(k) storing data representing the interrupted job interrupted to execute said new job; and (I) restoring said interrupted job in completion of said new job.

21. A method in accordance with claim 18, wherein:
said management table includes progress data indicating progress status of the jobs being executed in said plurality of image processing modules; and
said method further comprises the steps of:
(m) inputting new-job data indicating a new job to be executed in the highest priority; and
(n) allocating said new job at the head of a queue of waiting jobs to one of said plurality of image processing modules according to said progress data to thereby execute said new job in the least waiting time.
